# EUROPEAN PATENT APPLICATION

(11) **EP 1 927 305 A2**
(43) Date of publication of application: **04.06.2008**
(21) Application number: 07121825.9
(22) Date of filing: 28.11.2007
(51) Int. Cl.: A47G 23/03, B32B 5/18, B32B 25/10, B32B 27/36

(54) **A mat for a countertop, a tabletop or a tray**

(30) Priority: 01.12.2006 GB 0624047
(71) Applicant: Spark Promotions (Ireland) Limited, Bray Wicklow (IE); Alvera, Paolo, Hong Kong Discovery Bay (CN)
(72) Inventor: Alvera, Paolo, Discovery Bay Hong Kong (CN); Larkin, Brian, County Wicklow (IE)
(74) Representative: Fitchett, Stuart Paul

(57) **Abstract**

The present invention provides an improved mat for a countertop such as bar and comprises a rubber or rubber compound layer 5, a synthetic sponge layer 6 and a liquid permeable top layer 3 on which graphics may he printed. The top layer 3 can he of a very fine fabric such as woven polyester and on which very high quality graphics may be printed. However, liquids may still be retained by the mat by the synthetic sponge layer 6. Absorbed liquid is prevented from escaping from the layer 6 by the lower rubber layer 5 which also prevents slipping of the mat.

## Description

The present invention relates to a protector for a countertop, a tabletop or a tray and particularly, but not exclusively, to such a protector used on the surface of bars for standing drinks thereon, commonly referred to as a 'bar runner'.

Traditionally, bar runners have been in the form of bar towels, rectangular in shape and printed with advertising material so that when laid on a bar, for standing drinks thereon and absorbing spillage and condensation therefrom, the customer at the bar has the advertising material prominently placed before him.

These traditional bar towels have the disadvantage that the print quality is poor so that, even when new, the 'brilliance' of the towel is relatively poor. Furthermore, with laundering the quality of any graphic material on the towel further deteriorates.

As an improvement on the traditional bar towel, more recent bar runners have comprised rubber backing substrates with absorbent felt layers either bonded to these or, as in the case of the Spark Promotions "Bar Buddy"^{™}, bonded in a recess in the rubber base layer. This has the advantage, over the bar towel, that the felt layer can be printed to a far higher standard and convey more information. However, although such a counter mat offers significant improvements over the traditional bar towel, the felt layer will still pill and ball over time as it is repeatedly laundered.

According to a first aspect of the present invention there is provided a mat for a countertop, tabletop or a tray, the mat having: a liquid permeable first layer with an upper surface and a lower surface, the first layer being adapted to accept a marking visible on the upper surface; a liquid absorbent second layer having an upper surface and a lower surface, the upper surface of the second layer being bonded to the lower surface of the first layer; and a liquid-impermeable third layer having an upper surface and a lower surface, the upper surface of the third layer being bonded to the lower surface of the second layer, the third layer being formed of material with a high coefficient of friction relative to the first and second layers.

A mat in accordance with the first aspect of the invention, comprising three layers provides the advantage that it may have a liquid impermeable lower layer (to protect the surface of a bar or counter or the like) an absorbent middle layer (to absorb and retain any liquid), for example preventing glasses dripping when they are lifted from the mat, and a liquid permeable top layer which, as the top layer does not itself have to be liquid absorbent due to the provision of the middle layer, may be of a fine material which can provide a high "brilliance" when printed with graphics. The lower layer having a higher coefficient of friction is also advantageous in that it prevents the mat slipping.

Preferably, the second layer is a synthetic sponge, but this could be a felt layer, permitting absorbed fluids such as spilt drinks to be easily rinsed from the mat. The third layer is preferably a rubber or a rubber compounds which can be very flexible and therefore enable the mat to be laundered or rinsed without delaminating. Rubber also has a very high coefficient of friction to prevent the mat slipping. The rubber, or rubber compound, may typically comprise vulcanising agents to assist in bonding of the third layer to the second layer.

Advantageously, the first layer is a polyester material, which is particularly resilient to pilling or balling, easily printed and has a high brilliance. More preferably, the polyester is a woven polyester, which can have a very fine structure whilst retaining a high liquid permeability. The fine structure permits very high quality printing thereon and this layer is preferably printed with a graphic, which may be advertising.

Preferably, the mat has a peripheral edge portion, in which portion of the mat is thinner than in a central portion. This reduces the likelihood of the edge of the mat being caught, for example by a glass, when the glass is moved laterally relative to the mat, thus preventing or reducing spillage. Preferably, the peripheral portion extends inwards at least 10mm from the edge of the mat and has a thickness of less 2mm. More preferably, the edge portion prevents liquid seeping sideways through the second layer of the mat. This permits the mat to absorb liquid in the second layer but then prevent the absorbed liquid from seeping out of the mat, through lateral transmission through the second, absorbent layer.

Preferably, the backing layer has a thickness of less 0.7mm, which enables the mat to be very flexible and easily laundered. It is also preferable that each of the three layers extend over the complete area of the mat, enabling the mat to be easily fabricated.

The three layers may each extend over the complete area of the mat. Here the absorbent layer can be compressed in a peripheral portion of the mat such that it prevents liquid seeping out of the mat.

In an alternative construction of mat, the third layer may extend laterally beyond the first and second layers and form both the top and bottom surface of the mat in an area around the periphery of the mat. This may be used to provide an aesthetically pleasing border to the mat especially where the third layer is a sheet of rubber material. It is preferable that at least the first layer, or alternatively the first and second layer, extend partially into the peripheral edge portion wherein the first layer is recessed into the third layer in the peripheral edge portion. This protects the edge of the first layer, preventing it from being caught and thus pulled away from the third layer. It may be preferable if the first layer extends laterally beyond the second layer and extends partially into the peripheral edge portion where it is bonded directly to the third layer. This further reduces the likelihood of the separation of the first and third layers around the edge of the first layer.

According to a second aspect of the invention there is provided a method of producing a mat in accordance with the first aspect of the invention, the method including: bonding a layer of woven polyester material to a layer of synthetic sponge by means of an adhesive; placing a sheet of unvulcanised rubber or rubber compound and the combined polyester and synthetic sponge layer together in a mould, heating the mould to soften the rubber and compressing the sheets to bond them together when the rubber vulcanises.

Preferably, the mould has a cavity corresponding to the dimensions of the mat, the cavity has a central portion of a first depth and a peripheral portion less deep than the central portion.

One embodiment of the present invention will now be described by way of example only, with reference to the accompanying figures, in which like numerals are used throughout to indicate like parts, of which:
Figure 1 is a perspective view of a bar mat in accordance with the present invention;
Figure 2 is a cross-section through line 1-1 of Figure 1;
Figure 3 is a perspective view of an alternative construction of bar mat in accordance with the present invention; and
Figure 4 is a cross-sectional corresponding to line III-III of Figure 3.

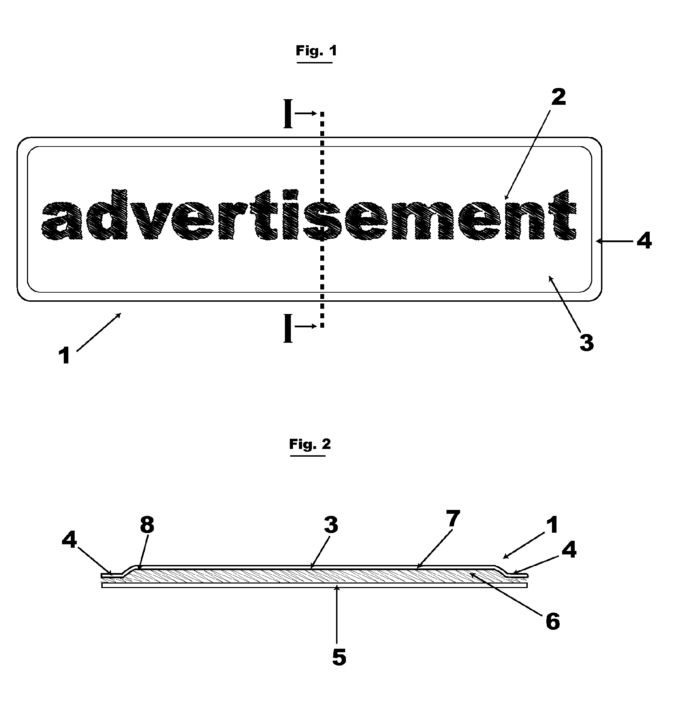

Referring to Figure 1, a rectangular bar mat, illustrated generally as 1, has a graphic 'Advertisement' printed thereon, but this could be any graphic. The mat 1 has a central portion 3 and a peripheral edge portion 4. As most clearly seen from Figure 2, the central portion 3 is thicker than the peripheral edge portion 4. The mat comprises a first lower layer 5 between 0.5 to 0.6mm thick and formed of a rubber compound. Above this, there is a layer 6 of synthetic sponge. In the central region 3, the synthetic sponge has a thickness of 5mm, reducing to less than 1mm in the peripheral region 4. On top of the synthetic sponge layer 6 there is a layer of finely woven polyester fabric 7 on which the graphic has been printed by a sublimation printing process or other.

The woven polyester 7 is liquid permeable and any liquid spilt thereon, or condensation forming on glasses stood thereon, is drawn through the polyester into the synthetic sponge layer 6 where it is absorbed. The absorbed liquid in the synthetic sponge layer 6 is prevented from penetrating the mat by the lower layer 5. Liquid is also prevented from seeping sideways out of the mat by the peripheral edge portions 4, where the synthetic sponge layer 6 has been compressed to such a degree that at this point it is liquid impermeable.

The mat has a maximum overall thickness of less than 6mm, with the thickness of the mat in the peripheral edge portion 4 being less than 2mm. This reduced thickness of the peripheral portion not only seals the absorbent layer 5 of the mat around the periphery, preventing liquid seeping sideways, but also prevents the 'lip' effect experienced by other countertop mats, where the raised rubber edge tends to catch glasses displaced laterally relative to the mat and topple them over. Furthermore, where the top surface of the mat in accordance with the present invention has polyester over the whole of the top surface, as opposed to the rubber edges, a glass moving laterally over the edge of the mat will tend to slide on the polyester and will slide up or down the inclined slope 8, as the polyester layer 7 has a relatively low coefficient of friction.

The mat illustrated in Figures 1 and 2 may be fabricated by first bonding the woven polyester fabric layer 7 to the synthetic sponge layer 6, ensuring the adhesive does not unduly reduce the permeability of the polyester fabric layer 7, cutting the resultant laminated sheet to a desired shape and placing it in a mould on top of the correspondingly shaped rubber layer 5. The mould is shaped to the shape of the mat as shown in Figures 1 and 2. The mould is then simultaneously heated and compressed such that the synthetic sponge layer 6 is compressed to a very great extent in the peripheral portion 4. The rubber or rubber layer 5 becoming molten at 170° partly penetrates the sponge layer 6, bonding the two layers 5 and 6 together when they are subsequently cooled. The rubber or rubber-compound of the layer 5 may comprise vulcanising agents to assist in the bonding process.

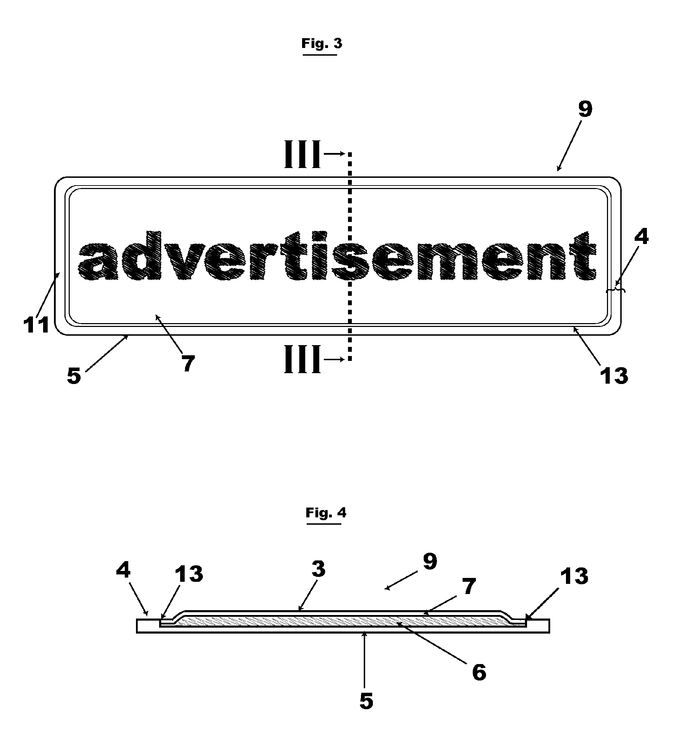

Referring now to Figures 3 and 4, an alternative construction of mat in accordance with the present invention is illustrated, Figure 3 being a perspective view of the mat and Figure 4 a cross section through the line III-III of Figure 3. The mat illustrated generally as 9 in Figures 3 and 4 is essentially the same as the mat of Figures 1 and 2 and comprises a first lower layer 5, 0.5 to 0.6 mm thick in the central portion and formed of a rubber compound, a layer 6 of synthetic sponge having a thickness in the central region 3 to 5mm and a layer 7 of screen- printed polyester fabric. The materials have the same properties of those described with reference to Figures 1 and 2 and the mat of Figures 3 and 4 differs only in the construction of the edge portion 4, where the rubber compound layer 5 is thicker. In this embodiment the absorbent layer 5 and polyester layer 7 extend only partially into the peripheral edge portion 4 and are compressed in the moulding process, by which the mat is formed, into the rubber compound layer 5 such that the edge of the layers 6 and 7 abut a step 13 in the layer 5 with the polyester layer 7 and top surface of the layer 5 being flush.

The polyester layer 7 may extend to a slightly greater extent laterally than the absorbent layer 6, in which case the polyester layer 7 will be bonded directly to the rubber compound layer 5 in the peripheral edge portion 4.

It will be understood that two examples of the present invention have been described by way of example only and that many variations will be apparent to the person skilled in the art, which variations fall within the scope of the appended claims. Particularly, the mat may have any desired shape, not just rectangular as shown.

## Claims

1. A mat for a countertop, tabletop or a tray, the mat having:
a liquid permeable first layer with an upper surface and a lower surface, the first layer being adapted to accept a marking visible on the upper surface;
a liquid absorbent second layer having an upper surface and a lower surface, the upper surface of the second layer being bonded to the lower surface of the first layer; and
a liquid-impermeable third layer having an upper surface and a lower surface, the upper surface of the third layer being bonded to the lower surface of the second layer, the third layer being formed of material with a high coefficient of friction relative to the first and second layers.

2. A mat as claimed in Claim 1, wherein the second layer is a synthetic sponge layer.

3. A mat as claimed in Claim 1 or 2, wherein the third layer is rubber or a rubber compound.

4. A mat as claimed in Claim 1 or 2, wherein the first layer is a polyester material.

5. A mat as claimed in Claim 4, wherein the polyester material is woven polyester.

6. A mat as claimed in any preceding claim, wherein the first layer is printed with a graphic.

7. A mat as claimed in any preceding claim, comprising a peripheral edge portion in which portion the mat is thinner than in a central portion.

8. A mat as claimed in Claim 7, wherein the peripheral portion extends inwardly at least 10mm from the edge of the mat and has a thickness of less than 2mm.

9. A mat as claimed in Claim 7 or 8, wherein the peripheral edge portion prevents liquid seeping sideways through the second layer out of the mat.

10. A mat as claimed in Claim 7, 8 or 9, wherein the second layer is compressed in the peripheral portion relative to the central portion.

11. A mat as claimed in any preceding claim, wherein the three layers each extend over the complete area of the mat.

12. A mat as claimed in Claim 7, 8 or 9, wherein the third layer extends laterally beyond the first and second layers and forms both the top and bottom surface of the mat in an area around the periphery of the mat.

13. A mat as claimed in Claim 12, wherein the first layer and second layer extend partly into the peripheral edge portion.

14. A mat as claimed in Claim 12, wherein the first layer extends laterally beyond the second layer and extends partly into the peripheral edge portion and is bonded directly to the third layer in the peripheral edge portion.

15. A mat as claimed in Claim 13 or 14, wherein the first layer is recessed into a third layer in the peripheral edge portion.

16. A mat as claimed in any preceding claim, wherein the third layer has a thickness of less than 0.7mm.

17. A mat as claimed in any preceding claim, having a maximum thickness of less than 6mm.

18. A method of producing a mat as claimed in any preceding claim, the method including: bonding a layer of woven polyester material to a layer of synthetic sponge by means of an adhesive; placing a sheet of unvulcanised rubber or rubber compound, and the combined polyester and synthetic sponge layer together in a mould, heating the mould to soften the rubber and compressing the sheets to bond them together.

19. A method as claimed in Claim 18, wherein the mould has a cavity corresponding to the dimensions of the mat, the cavity having a central portion of a first depth and a peripheral portion of less deep than the central portion.
